# EUROPÄISCHE PATENTSCHRIFT

(11) **EP 1 874 425 B1**
(45) Veröffentlichungstag und Bekanntmachung des Hinweises auf die Patenterteilung: **23.12.2015**
(21) Anmeldenummer: 06724449.1
(22) Anmeldetag: 20.04.2006
(51) Int. Cl.: B01D 25/21

(54) **KAMMERFILTERPLATTE**
CHAMBER FILTER PLATE
PLAQUE DE FILTRE A CHAMBRES

(30) Priorität: 22.04.2005 DE 202005006535 U
(43) Veröffentlichungstag der Anmeldung: 09.01.2008
(73) Patentinhaber: JVK Filtration Systems GmbH, 91166 Georgensgmünd (DE)
(72) Erfinder: HERMANN, Manfred, 90491 Nürnberg (DE)
(74) Vertreter: Tergau & Walkenhorst Patentanwälte - Rechtsanwälte
(86) Internationale Anmeldenummer: PCT/EP2006/003613
(87) Internationale Veröffentlichungsnummer: WO 2006/111377

(56) Entgegenhaltungen:
- CH-A5- 691 252
- DE-A1- 2 720 904
- FR-A- 1 024 255

## Beschreibung

Die Erfindung betrifft eine Kammerfilterplatte für eine Filterpresse. Derartige Kammerfilterplatten bestehen aus einem Plattenkörper und einem gegenüber der Plattenoberfläche des Plattenkörpers verdickten und um den gesamten Plattenkörper umlaufenden Plattenrand. Der Plattenrand weist also eine größere Dicke als der Plattenkörper auf. Innerhalb des Plattenrandes ist dadurch eine Ausnehmung mit dem Plattenkörper als Boden gebildet. Reiht man zwei oder mehrere Kammerfilterplatten zur Bildung eines Filterpakets nebeneinander auf, liegen sie mit ihren Rändern aneinander und bilden so innerhalb der Ränder jeweils eine Filterkammer zwischen sich aus.

Eine Kammerfilterplatte mit den Merkmalen des Oberbegriffs von Anspruch 1 ist aus DE 27 20 904 A1 bekannt. Eine ähnliche Kammerfilterplatte ist in CH 691 252 A5 offenbart.

Der gegenüber dem Plattenkörper sehr viel dickere Dichtrand beansprucht bei der Fertigung der aus Kunststoff bestehenden Filterplatte eine sehr viel längere Kühlzeit als der Plattenkörper selbst. Dies erhöht die Produktionszeit für die Filterplatte. Außerdem treten während des langen Abkühlprozesses im Bereich der Plattenränder unerwünschte Spannungen im Material auf.

Der Erfindung liegt deshalb die Aufgabe zugrunde, eine Kammerfilterplatte konstruktiv dahingehend zu verbessern, dass das Auftreten von Spannungen im Bereich des Plattenrandes während der Abkühlphase vermieden wird, und dass verschiedene Einsatzmöglichkeiten gegeben sind. Diese Aufgabe ist durch die Merkmalskombination des Anspruchs 1 gelöst.

In den Plattenrand der erfindungsmäßigen Kammerfilterplatte sind mehrere sich in Längsrichtung und/oder in Querrichtung der Plattenebene erstreckende Hohlkanäle eingeformt. Auf diese Weise ist die tatsächliche Wandstärke des Plattenrandes, also derjenige Teil des Plattenrandes, welcher tatsächlich aus Kunststoff besteht, gegenüber herkömmlichen Kammerfilterplatten nach dem Stand der Technik deutlich reduziert. Durch eine entsprechende Dimensionierung des Hohlraums kann die tatsächliche Wandstärke des Plattenrandes, welche den Hohlraum umgibt, so gewählt sein, dass sie exakt der Wandstärke des Plattengrundkörpers entspricht. Aufgrund dieser angenährten Wandstärke yerläuft die Abkühlphäse der:gesamten Kammerfilterplatte sehr viel homogener als bei anderen Ausführungsformen.

Erfindungsgemäß, sind mehrere voneinander separierte Hohlkanäle in den Plattenrand eingebracht. Dadurch ist es möglich, die .Hohlkanäle zugleich als Zulaufkanal oder Ablaufkanal für das in der Kammerfilterplatte zu verarbeitende Filtrat zu verwenden. Kombiniert man diese Verwendung als Zulaufkanal oder Ablaufkanal mit den erfindungsgemäß vorhandenen mehreren separaten Hohlkanälen, können verschiedene Kanalsysteme für verschiedene Einsatzzwecke geschaffen werden. Beispielsweise kann ein Teil der Hohlkanäle als Zulauf und ein anderer Teil der Hohlkanäle als Ablauf verwendet werden.

Besonders vorteilhaft ist es mit Hilfe eines bekannten Gasinnendruckverfahrens oder Wasserinnendruckverfahrens den jeweiligen Hohlkanal in den Plattenrand einzubringen. Während der Fertigung wird hierbei in die Form für die Kammerfilterplatte ein Fluid eingebracht, welches wie ein Formkern wirkt. Es kann beispielsweise eine Schlammstruktur oder ein anderes flüssiges oder gasförmiges Medium injiziert werden. Dieses nach Art eines Formkerns wirksame Medium bildet den Hohlraum für den Hohlkanal. Nach dem Erkalten der Kammerfilterplatte muss der Plattenrand nur noch angebohrt werden, um das Medium aus dem Hohlkanal des Plattenrandes wieder zu entfernen.

Bei dem nachfolgend geschilderten Beispiel handelt es sich um einen Stand der Technik, der das Verständnis der Erfindung erleichtert. Es zeigen:
Fig. 1 eine perspektivische Ansicht einer mittig geschnittenen Kammerfilterplatte,
Fig. 2 die Vorderansicht gemäß Pfeil 11 in Fig. 1 der Kammerfilterplatte.

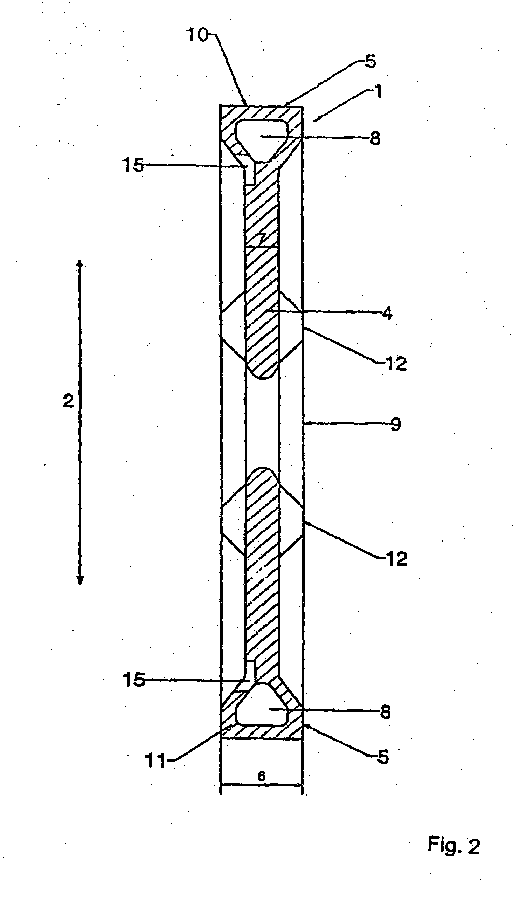

Die Plattenebene der Kammerfilterplatte 1 liegt in der von der Längsrichtung 2 und der Querrichtung 3 aufgespannten Ebene. Die Kammerfilterplatte 1 besteht aus dem Plattengrundkörper 4 und dem den Plattengrundkörper 4 umrandenden Plattenrand 5. Aus der Darstellung der Fig. 2 besonders gut erkennbar ist die Tatsache, dass die Plattenranddicke 6 die Grundkörperdicke 7 des Plattengrundkörpers 4 bei weitem übersteigt. Beim Ausführungsbeispiel beträgt die Plattenranddicke 6 nahezu das doppelte der Grundkörperdicke 7.

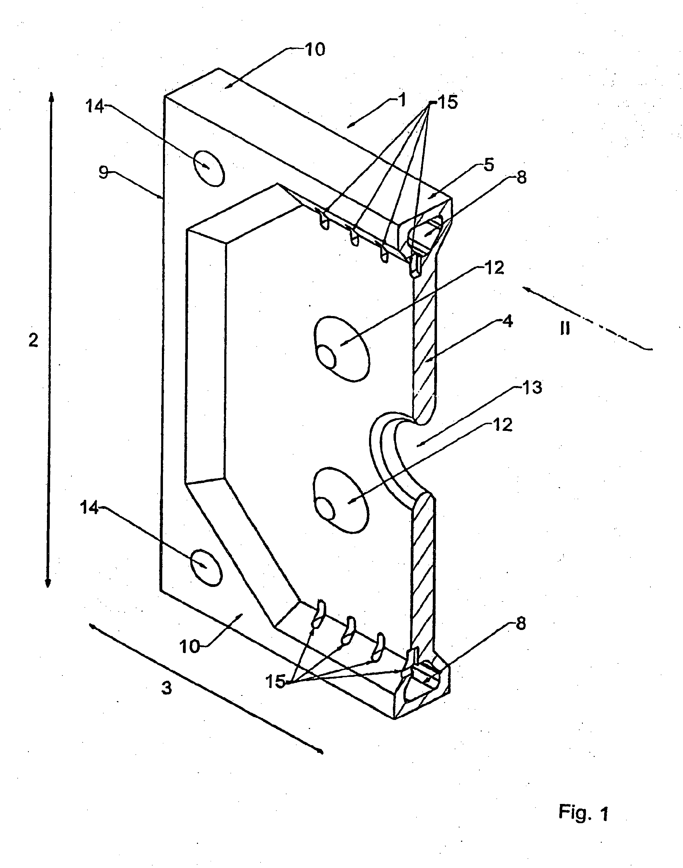

Zur Verringerung der aus Kunststoffmaterial bestehenden Wandstärke des Plattenrandes 5 ist deshalb in den Plattenrand der Hohlkanal 8 eingebracht. Der Hohlkanal 8 verläuft bei der Kammerfilterplatte 1 jeweils in Querrichtung 3. Im Falle einer Ausführungsform mit umlaufendem Hohlkanal 8 erstreckt sich der Hohlkanal 8 auch entlang der in Längsrichtung 2 verlaufenden Plattenlängsseite 9. Der Hohlkanal 8 verläuft auch durch die beiden in Fig. 1 geschnitten dargestellten Plattenquerseiten 10. Aus der Fig. 2 ist schließlich erkennbar, dass die durch die Einbringung des Hohlkanals 8 letztlich erhalten bleibende Hohlkanalwanddicke 11 sogar geringer ist als die Grundkörperdicke 7 des Plattengrundköpers 4. Aus der Dimensionierung der Grundköperdicke 7 des Plattengrundkörpers 4 einerseits und der Hohlkanalwanddicke 11 im Bereich des Plattenrandes 5 andererseits resultiert das mit der Erfindung erwünschte und erzielte homogene Abkühlverhalten der Kammerfilterplatte 1 während des Abkühlvorgangs.

Die Kammerfilterplatte 1 weist auf ihrem Plattengrundkörper 4 noch zwei Stütznocken 12 zur Abstützung entweder einer Membran oder zur Abstützung des Plattengrundkörpers 4 an entsprechenden Stütznocken des Plattengrundkörpers einer benachbarten Kammerfilterplatte auf. Auch muss für den Betrieb der Kammerfilterplatte 1 ein Filtertuch angebracht sein, welches in den Figuren der Einfachheit halber fortgelassen worden ist.

In Fig. 1 weiterhin erkennbar ist die zur Hälfte dargestellte Einlauföffnung 13 für das Filtrat. Des weiteren erkennbar sind die Filtratablaufbohrungen 14. Die Filtratablaufbohrungen 14 sind beim Ausführungsbeispiel der Kammerfilterplatte 1 in den Eckbereichen der Plattenränder 5 angeordnet. Es ist möglich, die Filtratablaufbohrungen 14 so anzuordnen, dass die Hohlkanäle 8 in die Filtratablaufbohrungen 14 münden, sofern dies gewünscht ist. Allerdings verlaufen die Filtratablaufbohrungen 14 parallel zur Plattenranddicke 6 bzw. zur Grundkörperdicke 7, also sowohl senkrecht zur Längsrichtung 2 als auch zur Querrichtung 3. Die Filtratablauföffnungen 14 dürfen deshalb nicht mit den Hohlkanälen 8 verwechselt werden.

Beim Ausführungsbeispiel schließlich erkennbar sind die seitlich in den Hohlkanal 8 eingebrachten, insbesondere aus dem Hohlkanal 8 ausgefrästen Auslaufschlitze 15. Diese Auslaufschlitze 15 dienen dazu, dass als Formkern wirkende Fluid aus den Hohlkanälen 8 nach der Fertigung der Kammerfilterplatte 1, also nach dem Abkühlen wieder zu entfernen.

### Bezugszeichenliste

- 1: Kammerfilterplatte
- 2: Längsrichtung
- 3: Querrichtung
- 4: Plattengrundkörper
- 5: Plattenrand
- 6: Plattenranddicke
- 7: Grundköperdicke
- 8: Hohlkanal
- 9: Plattenlängsseite
- 10: Plattenquerseite
- 11: Hohlkanalwanddicke
- 12: Stütznocke
- 13: Einlauföffnung
- 14: Filtratablaufbohrung
- 15: Auslaufschlitz

## Patentansprüche

1. Kammerfllterplatte (1) für eine Fifterpresse mit einem den Plattengrundkörper (4) umrahmenden, gegenüber der Oberfläche des Plattengrundkörpers (4) verdickten Plattenrand (5),
**gekennzeichnet durch**
mehrere voneinander separate sich in Längsrichtung (2) und/oder in Querrichtung (3) der Plattenebene erstreckende Hohlkanäle (8) im Plattenrand (5), wobei ein oder mehrere Hohlkanäle (8) jeweils einen Zulaufkanal und ein oder mehrere Hohlkanäle (8) jeweils einen Ablaufkanal für die Kammerfilterplatte (1) bilden.

## Claims

1. Chamber filter plate (1) for a filter press, comprising a plate edge (5) which frames the plate base body (4) and is thicker than the surface of the plate base body (4), **characterised by** a plurality of mutually separate hollow channels (8) in the plate edge (5), which channels extend in the longitudinal direction (2) and/or in the transverse direction (3) of the plane of the plate, one or more hollow channels (8) forming a feed channel and one or more hollow channels (8) forming an outlet channel respectively for the chamber filter plate (1).

## Revendications

1. Plaque de filtre à chambres (1) pour un filtre-presse avec une bordure de plaque (5) qui entoure le corps de base (4) de la plaque et qui est épaissie par rapport à la surface du corps de base (4) de la plaque, **caractérisée par** plusieurs canaux creux (8), qui sont séparés les uns des autres et situés dans la bordure de plaque (5) et qui s'étendent dans la direction longitudinale (2) et/ou dans la direction transversale (3) du plan de la plaque, dans laquelle un ou plusieurs canaux creux (8) forment respectivement un canal d'admission et un ou plusieurs conduits creux (8) forment respectivement un canal d'évacuation pour la plaque de filtre à chambres (1).
